# EUROPEAN PATENT APPLICATION

(11) **EP 1 598 762 A1**
(43) Date of publication of application: **23.11.2005**
(21) Application number: 04716042.9
(22) Date of filing: 01.03.2004
(51) Int. Cl.: G06F 17/60

(54) **ELECTRONIC MONEY VALUE CONVERSION DEVICE, SYSTEM, AND ELECTRONIC MONEY VALUE CONVERSION METHOD**

(30) Priority: 28.02.2003 JP 2003054186
(71) Applicant: SONY CORPORATION, Tokyo 141-0001 (JP); Bitwallet Inc., Tokyo 141-0032 (JP)
(72) Inventor: IUCHI, Akihiro, Sony Finance International, Inc., Tokyo 107-0062 (JP); SAITO, Tadashi, Sony Finance International, Inc., Tokyo 107-0062 (JP); UCHIDA, Akio, All Nippon Airways Co., Ltd., Tokyo 144-0041 (JP); UMASE, Soichi, All Nippon Airways Co., Ltd., Tokyo 144-0041 (JP); ITO, Koji, Bitwallet, Inc., Tokyo 141-0032 (JP); SHIBUYA, Tomokuni, Bitwallet, Inc., Tokyo 141-0032 (JP); OKUDE, Tsutomu, Bitwallet, Inc., Tokyo 141-0032 (JP)
(74) Representative: Körber, Martin Hans
(86) International application number: PCT/JP2004/002476
(87) International publication number: WO 2004/077327

(57) **Abstract**

The present invention is relative to a system enabling a through operation between a mileage system and an electronic money system. The mileage system is such a system in which mile points as distance points corresponding to the flight distance of an aircraft are accumulated and exchanged for boarding tickets and other services. An IC card (230) having stored a wallet number in it is used. The wallet number and a mileage number are managed in a correlated fashion. Responsively to a request from a user, reference is made to an electronic money value ledger (222), matched to the wallet number, while reference is also made to a mile point ledger (122), matched to the mileage number. A preset number of the mile points are changed over to an electronic money value and, depending on changed-over results, the electronic money value ledger is subjected to integration processing, while the mile point ledger is subjected to deduction processing.

## Description

### Technical Field

This invention relates to a system, an apparatus and a method for changing over the electronic money value. More particularly, it relates to a program for carrying out the method for changing over the electronic money value, and to a recording medium having recorded the program thereon.

The present application claims priority of the Japanese Patent Application 2003-54186, filed in Japan on February 28, 2003, the entirety of which is incorporated by reference herein.

### Background Art

An electronic money card, comprising an information recording medium, such as an IC card, having an electronic money value stored thereon, is now in widespread use. On the other hand, a mileage system, in which mile points, as distance points corresponding to the flight distance of an aircraft the user is onboard, are accumulated and changed over to boarding tickets or the like services, is also in widespread use. In addition, a point system, in which a point issued by e.g. a store, is changed over to money or an electronic money value, is disclosed in, for example, the Japanese Laid-Open Patent Publication 9-44732 and the Japanese Laid-Open Patent Publication 2002-7841.

The point changeover systems, disclosed in these Patent Publications, are aimed at cashing in a closed system, but are not targeted at a point exchange with other point systems, in particular at a through operation system with a mileage system and an electronic money system which have so far been customary. This through system with different systems is desirable for a user in that it enlarges the scope of privileges that may be enjoyed by the user, while it is desirable for a service provider in that it improves the ratio of service utilization by the users at large.

### Disclosure of the Invention

It is an object of the present invention to provide a novel apparatus, system and a method for changing over the electronic money value, whereby the aforementioned problems of the related art may be resolved.

It is another object of the present invention to provide a novel apparatus, system and a method for changing over the electronic money value for enabling a through operation between a mileage system, which accumulates mile points as distance points corresponding to the flight distance of an aircraft a user was onboard and which exchanges the so accumulated mile points for boarding tickets or other services, and an electronic money system.

For accomplishing the above objects, the present invention provides an electronic money value changeover system comprising a card, for example, a non-contact IC card, including an information recording section allowing for reading out and writing the information, with the information recording section having recorded thereon the electronic money wallet information, including a wallet number, correlated with a mileage number, from the outset.

This system includes an electronic money management server managing an electronic money value ledger in association with the wallet number, and a mileage management server managing a mile point ledger in association with the mileage number.

The electronic money value changeover apparatus of the present invention manages the wallet number and the mileage number in a correlated fashion, refers to the electronic money value ledger matched to the wallet number from the electronic money management server, while referring to the mile point ledger matched to the mileage number from the mileage management server, responsively to a request from a user, changing over preset mile points to an electronic money value, integrating the electronic money values in an electronic money value ledger of the electronic money management server, and deducting the mile points in the mile point ledger of the mileage management server, depending on the changeover results.

The electronic money value changeover apparatus of the present invention also includes an electronic money value update terminal for reading out a wallet number from the mileage card and for referring to the electronic money value ledger of the electronic money management server to update the electronic money wallet information recorded in the electronic money equivalent portion.

With the electronic money value changeover apparatus, according to the present invention, provided with the electronic money value update terminal, a through operation between the electronic money system and a mileage system, which has so far been used, is now possible. Such a system, providing for through operation, enhances the range of privileges that may be enjoyed by the user, while improving the service use rate by users, with advantages for service providers.

According to the present invention, changeover from mile points to the electronic money value may be by batch processing or by real-time processing.

The electronic money value changeover apparatus, according to the present invention, may be designed and constructed so that the use information of the electronic money value is acquired, and integration data for integrating relevant mile points, is notified, responsively to the acquired information, to the mileage management server, which then integrates the relevant mile points.

With this configuration, the mile points are increased by exploiting the electronic money, thus providing for more intimate through operation between the electronic money and the mile points.

The present invention is also relative to an electronic money value changeover apparatus for executing the aforementioned electronic money value changeover system, a program for having a computer execute the functions of the electronic money value changeover apparatus, a computer-readable recording medium, having the program recorded thereon, and a method for operating the electronic money value changeover system according to the present invention.

Other objects and specified advantages accrued from the present invention will become more apparent from the following explanation of preferred embodiments especially when read in conjunction with the drawings.

### Brief Description of the Drawings

Fig.1 is a block diagram showing a schematic configuration of an electronic money value changeover system according to the present invention.
Fig.2 shows a mile point ledger used in an electronic money value changeover system according to the present invention.
Fig.3 is a plan view showing a mileage card used in an electronic money value changeover system according to the present invention.
Fig.4 is a plan view showing an electronic money card used in the electronic money value changeover system according to the present invention.
Fig.5 shows an electronic money value ledger used in an electronic money value changeover system according to the present invention.
Fig.6 shows a mileage number/ wallet number conversion table as used in the electronic money value changeover system according to the present invention.
Fig.7 illustrates a batch processing flow for the electronic money value changeover system according to the present invention.
Fig.8 illustrates the real time flow of the electronic money value changeover system according to the present invention.
Fig.9 illustrates the flow of mileage integration by employing the electronic money by the electronic money value changeover system according to the present invention.

### Best Mode for Carrying out the Invention

Referring to the drawings, an electronic money value changeover system, according to the present invention, an apparatus used for this system, and a program for running the electronic money value changeover system, according to the present invention, will be explained in detail.

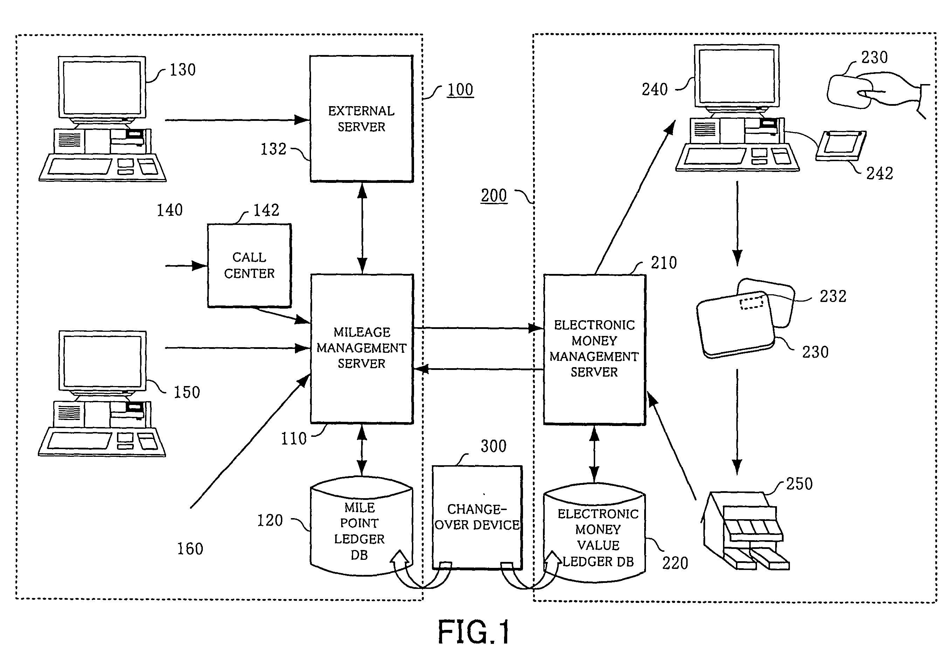

Referring first to Fig.1, an electronic money value changeover system according to the present invention will now be explained.

The electronic money value changeover system according to the present invention is a system combined from a point system and an electronic money value system. Concretely, a through operation between a mileage system 100, used so far, in which mile points as distance points corresponding to the flight distance of aircrafts, on which the user was on board, are accumulated, and the so accumulated mile points are exchanged for boarding tickets or the like services, and an electronic money value system 200, for carrying out information exchange therebetween, is rendered possible with the combined system, in such a manner that the range of privileges that may be enjoyed by the user will be extended to an electronic money system, whereby the use frequency of the services by the user may be raised for increasing the proceeds on the part of the service providers.

Referring now to Fig. 1, a mileage system 100, forming an electronic money value changeover system according to the present invention, will now be explained. The mileage system 100 is a system providing mileage services and is made up by a mileage management server 110 and a mile point ledger DB 120. The mileage services represent a program for passengers having a high rate of utilization of aircrafts of an air transport company. More specifically, the mileage services provide mile points depending on the boarding distance of a passenger and, when a certain mile point, representing a preset boarding distance, is reached, offer a charge-free airline ticket or privileges of changing to a passenger seat of a higher grade to the passenger.

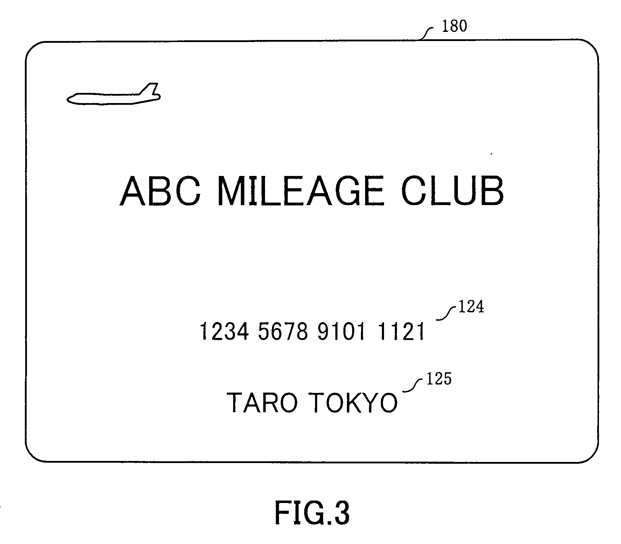

By and large, the user owns a mileage card 180 shown in Fig.3. The mileage card 180 carries a mileage number 124, printed thereon, and also carries a magnetic band or tape for electrical recording. The mileage card additionally carries a user's name 126, printed thereon. The user owns, in addition to the mileage number 124, a password, and is authenticated by the mileage number 124 and the password to access a mileage management server 110 as later explained. Although the mileage card 180, shown in Fig.3, has only the function as a mileage card, it may also own the function as an electronic money card and that as a credit card simultaneously.

The mileage management server 110 is formed by an information processing apparatus, such as a computer, and manages increasing or decreasing the mile points, responsively to a request from an external terminal device or an external server. Although the mileage management server 110 in the illustrated embodiment is formed as a sole server device, it may also be formed by plural server devices.

There may be a large variety of external terminal devices capable of accessing the mileage management server 110. Fig.1 shows, as typical of the external terminals, a different system server 132, such as a boarding ticket reserve system, a call center 142, connected to a telephone set 140, a user terminal 150, acted on by an operator, and an operator terminal 160, acted on by an operator. The mileage management server 110 and the external terminal devices are connected to each other by a public network, such as the Internet, or a dedicated network, for bidirectional communication.

In case the external system server 132 is formed as a reserve management server, a mileage integrating data is generated in case a user has newly reserved a boarding ticket or performed a mile point adding act, such as check-in. The mileage management server 110 is responsive to the cumulative data to carry out mile point integrating processing.

Moreover, the user may access the mileage management server 110, using e.g. an external terminal, to accept usual mileage services, that is, various privileges exploiting mile points, such as by receiving coupons, e.g. airline tickets.

The user may also exchange the mile points for electronic money values, by exploiting the system of the present invention, as later explained, to purchase other commodities or services in a real shop or a virtual shop, such as electronic mall, where the electronic money value is valid.

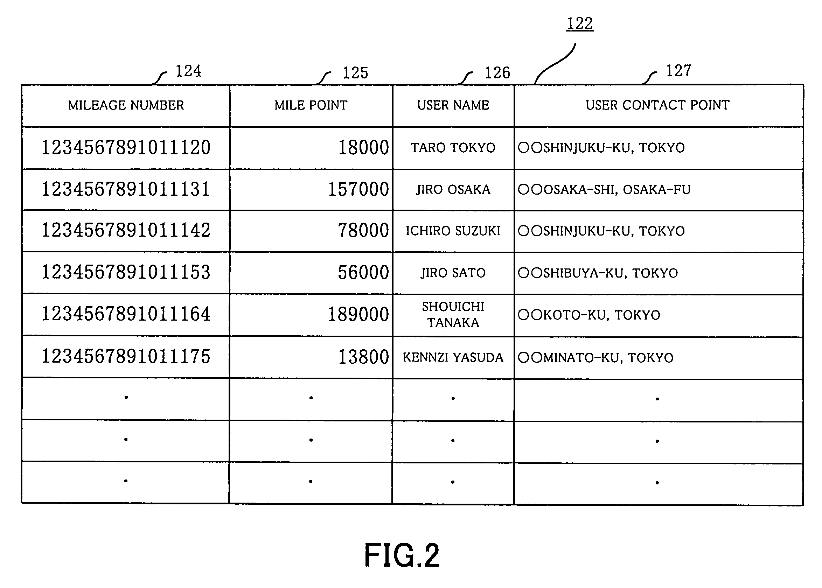

When adding to or deducting the mile points, the mileage management server 110 refers to the mile point ledger DB 120. This mile point ledger DB 120 has stored therein a mile point ledger 122 shown in Fig.2. The mile point ledger 122, shown in Fig.2, is ledger data including a mileage number management area 124, a multi-point management area 125, a user name management area 126 and a user contact point management area 127. The mile point ledger 122 manages at least the mileage number and the mileage point in a correlated fashion. The remaining management items are ancillary to the configuration of the system according to the present invention and may optionally be designed in association with the objective of the ledger data.

The mileage number is a number allocated to each user or to each mileage card in accepting mileage services. The mile point is a point that may be acquired for a preset mileage and may be converted to other services or commodities. Of course, the mile point may be acquired not only by boarding on an aircraft but also in various other phases depending on the mileage services presented. The mile point may possibly be acquired by point changeover from points of other point services to the mileage points.

The foregoing is the succinct explanation of the mileage system 100. An electronic money value system 200, as a through operating system with this mileage system 100, will now be explained. This electronic money value system 200 includes an electronic money management server 210 and an electronic money value ledger DS 220, as shown in Fig.1.

By the electronic money is usually meant virtual money circulated on the network. In the system of the present invention, the electronic money also encompasses electronic cash recorded on a pre-paid card or on an IC card.

The pre-paid card is a card configured for writing the electronic cash information on a magnetic band tape formed on the back side thereof. The information recorded on the prepaid card may be updated by a contact card readout/write device.

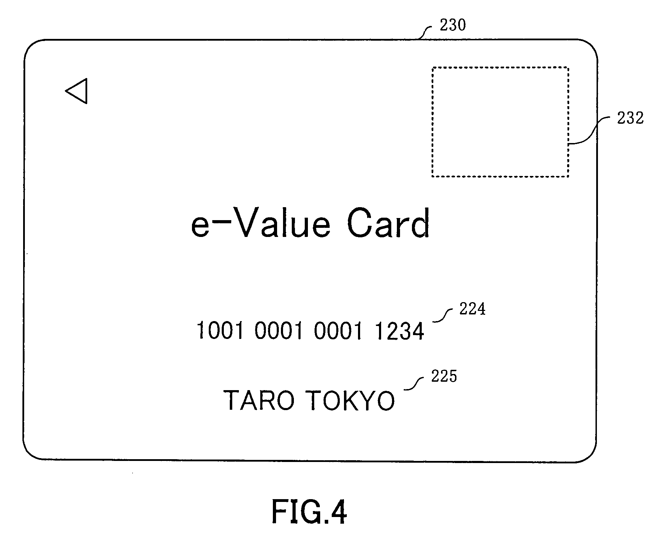

The IC card, also termed a non-contact card, within the bulk part of which is built-in an IC chip 232, as an information recording section, allowing for readout and recording of the information, as shown in Fig.4. When the IC card is drawn close to a card reader, the card reads out electrical waves, transmitted from the card reader, in a non-contact fashion. An IC section comes into play by the electrical waves received to read or write the information.

The IC card 230, shown in Fig.4, operates as an electronic wallet. On the surface of the IC card are printed a wallet number 224 and a user name 226. The wallet number is a number allocated to each IC card or to each user. Since the electronic money card operates as an electronic purse, an appellation of the wallet number is used as a number for identifying the electronic money card. However, the present invention is not limited to this appellation. In the embodiment illustrated, the wallet number 224 and the user name 226 are printed on the surface of the IC card 230, however, they are also electrically recorded within the IC chip 232 as well.

An electronic money management server 210 is made up by an information processing apparatus, such as a computer, and manages incomings and outgoings of the electronic money value from one user to the next. Although the electronic money management server 210 is designed as a sole server device, in the embodiment shown in Fig.1, it may, of course be distributed in plural functions to make up the electronic money management server from plural servers.

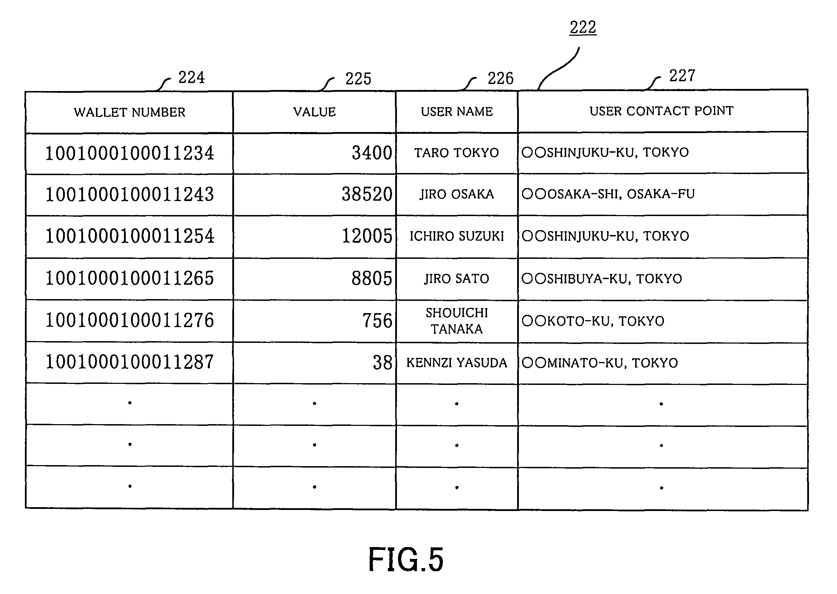

In managing the incomings and outgoings of the electronic money value, the electronic money management server 210 refers to an electronic money value ledger DB 220. The electronic money value ledger DB 220 has stored therein an electronic money value ledger 222 shown in Fig.5. The electronic money value ledger 222, shown in Fig.5, is ledger data including a wallet number management area 224, a value (electronic cash) management area 225, a user name management area 226 and a user contact destination management area 227. Meanwhile, the electronic money value ledger 222 manages at least the wallet number and the electronic money value (electronic cash) in correlated fashion to each other. The remaining management items are ancillary to the configuration of the system according to the present invention and may optionally be designed in association with the objective of the ledger data.

The wallet number is a number allocated from one individual user to another or from one electronic medium, such as IC card, to another. The electronic money value, also termed the electronic cash, is the virtual currency recorded on the IC chip. Hence, the value decreases in an amount corresponding to the amount used. The value may also be increased as necessary on charging.

In the electronic money value ledger 222, shown in Fig.5, there is shown the balance of the electronic money value at the current time. Alternatively, the electronic money value ledger may also be constructed for recording the use hysteresis of the electronic money value.

In the electronic money value system 200, shown in Fig.1, a reference numeral 240 denotes a charge terminal. The charge terminal 240 is made up by an information processing terminal, such as a computer device. To the charge terminal 240 is connected a readout write device 242. The readout write device 242 has the function of reading out or writing the information in the IC card, in a non-contact fashion. To this end, the readout write device is capable of generating weak electrical waves. The charge terminal 240 is connected to the electronic money management server 210 for bidirectional communication over a public network, such as the Internet, or over a dedicated network.

When the user charges, he/she draws the IC card 230 to close to the read/write device 242, or contacts the IC card with the read/write device 242, such that the wallet number and the electronic money value information, stored in the IC card 230, are read out to the charge terminal 240. The charge terminal 240 accesses the electronic money management server 210 to refer to the electronic money value ledger 222. Should there be any gift value in the electronic money value ledger 222, such gift value is written via readout write device 242 on the IC card 230. Meanwhile, the gift value means the value that can be charged to the IC card 230, without being limited to the value presented by the service provider free of charge or as a privilege.

The user is able to purchase services or commodities, by the IC card 230 charged by the charge terminal 240, in a real store or in a virtual store 250, adapted for coping with the electronic money, within a limit of the amount as stored in the IC chip 232.

An electronic money value changeover device 300 for changing over the mile points to electronic money value, forming the electronic money value changeover system according to the present invention, will now be specifically explained.

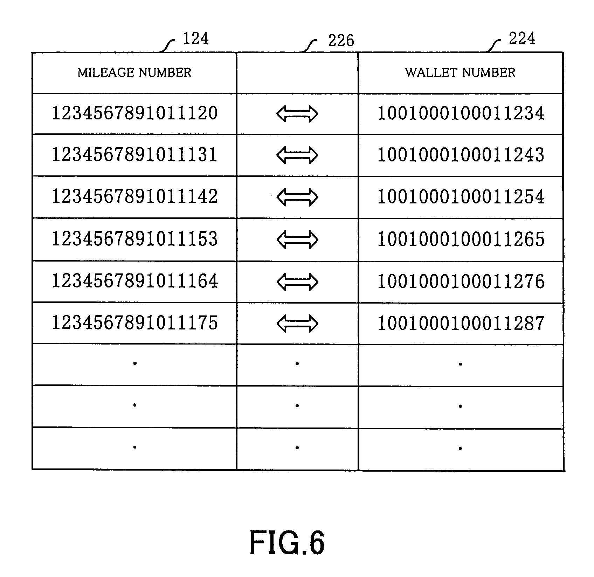

The electronic money value changeover device 300 according to the present invention includes a mileage number/ wallet number conversion table 310, such as is shown in Fig.6. The mileage number/ wallet number conversion table 310 includes a mileage number management area 302, a wallet number management area 304 and a changeover area 306 between the two areas. In this manner, the wallet number of the electronic money and the mileage number are managed in a pre-correlated state in the mileage number/ wallet number conversion table 310.

The mile point/ electronic money value changeover device 300 is responsive to a request from a user to refer to the electronic money value ledger 222, associated with the wallet number, from the electronic money management server 210, as well as to refer to the mile point ledger 122, associated with the mileage number, from the mileage management server 110.

The mile point/ electronic money value changeover device 300 changes over the mile points, specified by the user, to the electronic money value, in association with a preset conversion rule. The conversion rule for changing over the mile points to the electronic money value may freely be set depending on service contents. For example, one mile may be converted to the value one, or to the value ten, as desired.

In the foregoing, the configuration of the electronic money value changeover system according to the present invention has been explained. The flow of changeover from the mile points to the electronic money, with the use of the present system, will now be explained.

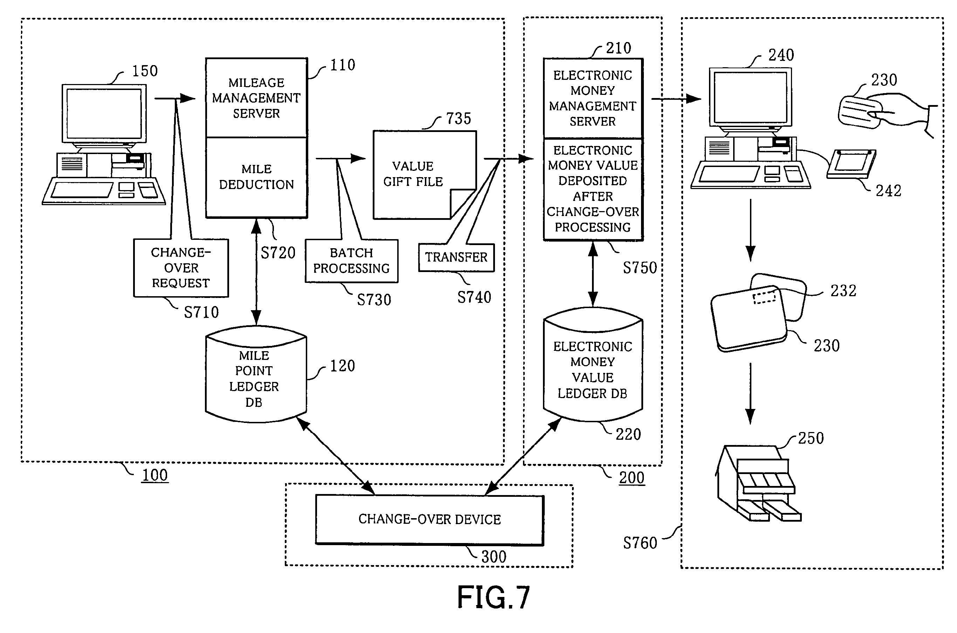

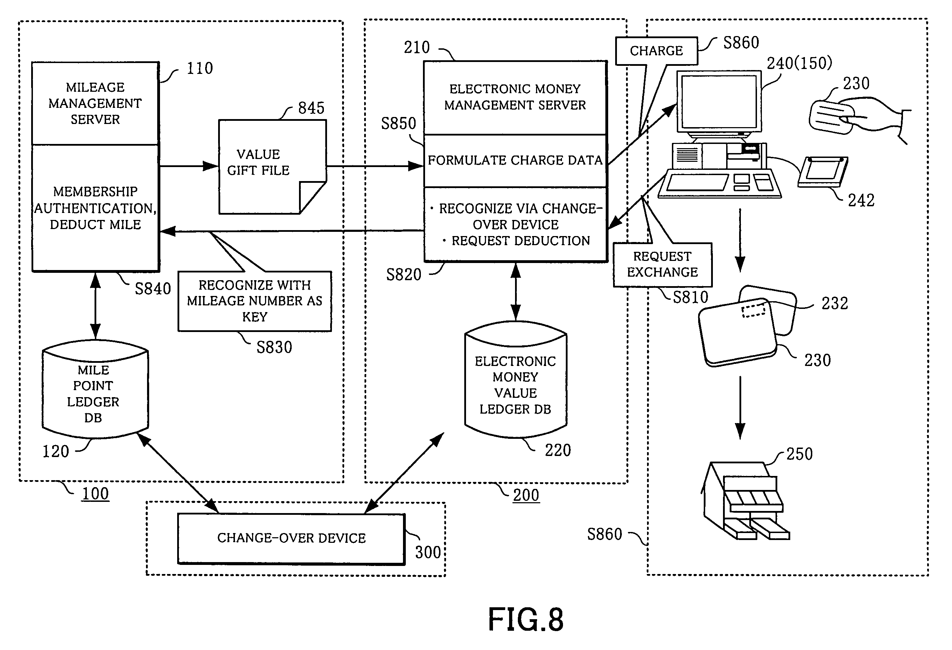

The changeover from the mile point to the electronic money value may be carried out by batch processing, as shown in Fig.7, or by real-time processing, as shown in Fig.8.

First, referring to Fig.7, the flow of changing over the mile points to the electronic money value by the batch processing system will be explained.

First, a user desirous to change over the mile points to the electronic money accesses the mileage management server 110 from a user's terminal 150, either directly or indirectly through an external system, to make a request for exchanging all or part of the mile points he/she owns for the electronic money (S710).

In compliance with the user's request, the mileage management server 110 refers to the mile point ledger 122 to carry out processing for deducting the mile points (S720). It is noted that, at this time point, the mile points are not changed over to the electronic money value, but simply the processing of mile point deduction is carried out. That is, according to the present invention, the user is unable to charge in real time to an electronic money card he/she owns and is able to charge only after executing the batch processing.

According to the present invention, a value gift file 735 for exchanging the mile points for the electronic money value is formulated by batch processing e.g. during night when the load on the mileage management server 110 is small. The batch processing may be carried out periodically or when a preset quantity of data has been accumulated. In the value gift file 735, there are included the date, mileage number and the electronic money value as changed over from the mile points (corresponding to the value gift).

The value gift file, so prepared, is then transmitted to the electronic money management server 210 (S740). The value gift file may be transmitted periodically or when a preset quantity of data has been accumulated.

The mile point/ electronic money value changeover device 300 refers to the mileage number and the wallet number, based on the value gift file 735 sent to the electronic money management server 210, to add the electronic money value of the matched wallet number as the value gift (S750).

The mile points are changed over to the electronic money value, as described above, so as to be stored in the electronic money value ledger 222 of the electronic money value ledger DB 220. The user then charges the value to the electronic money card 230 he/she owns, as necessary, via charge terminal 240. The user then is able to purchase commodities or services in a real shop or a virtual shop, such as electronic mall, where the electronic money value is valid (S760).

Referring to Fig.8, the flow for changing over the miler points to the electronic money value by real-time processing will now be explained.

First, a user desirous to change over the mile points to the electronic money requests the electronic money management server 210 to exchange all or part of the mile points he/she owns for the electronic money (S810), from a user's terminal 150, also used as the charge terminal 240, either directly or indirectly through an external system. Although the charge terminal 240 and the user's terminal 150 are of the same configuration, these may be of different configurations and may issue a changeover request through another system.

The electronic money management server 210 then is connected on-line to the mileage management server 110 and changes over the wallet number, read out from the electronic money card 230, to the mileage number, based on the mileage number/ wallet number conversion table 310 of the mile point/ electronic money value changeover device 300, while transmitting a request for mile point deduction (S820).

In this manner, the mileage management server 110 effects membership authentication, based on the mileage number sent via mileage number/ wallet number conversion table 310 (S810). Following the membership authentication, the mileage management server 110 deducts mile points (S840). The mileage management server 110 also sends mile point deducted data 845 to the electronic money management server 210. In the mile point deducted data 845, there are included at least the mileage number and the deducted mile point information.

The electronic money management server 210 formulates charge data based on the mile point deducted data 845, transmitted thereto (S850). The charge data formulated is sent to the charge terminal 240, responsively to the user's request, and the electronic money card 230 is accordingly charged through the readout write device 242 (S860).

After value charge, described above, goods or services may be purchased in a real shop or a virtual shop 250, where the electronic money value is valid, within the limits of the electronic money value charged (S860).

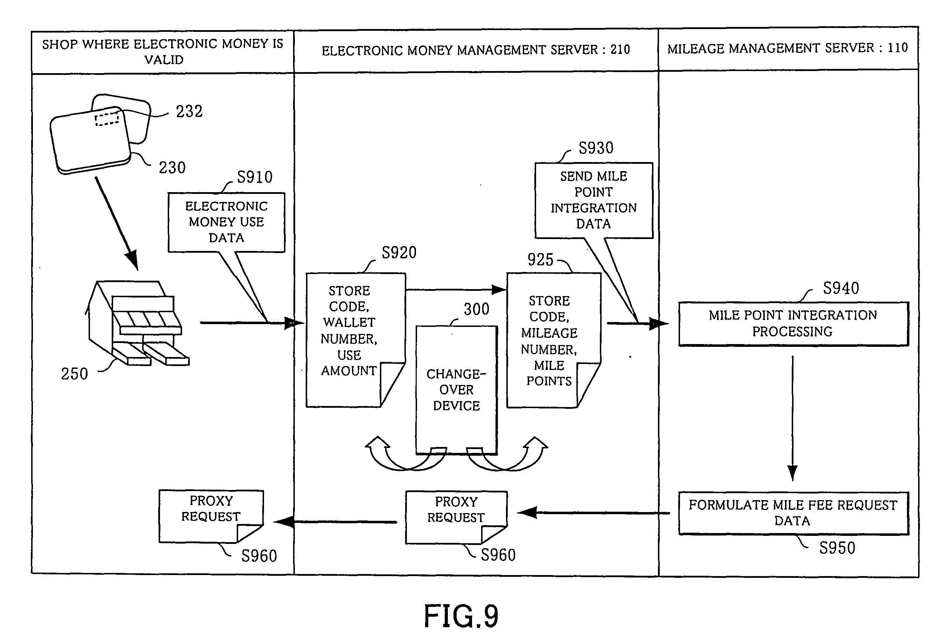

Referring to Fig.9, the processing flow of mile point integration, through use of the electronic money, will be explained. This processing flow enables the mile points to be added, through use of the electronic money, to permit the circulation of the electronic money and the mile points to allow for a smoother and stronger through operation between the mileage system and the electronic money system.

If a user consumes electronic money, using e.g. an electronic money card 230, in a real shop or a virtual shop 250, where the electronic money value is valid, electronic money use data 920 is sent over e.g. the Internet to the electronic money management server 210 (S910). In the electronic money use data 920, there may be contained the information exemplified by e.g. a shop code, a wallet number or the amount used.

The electronic money management server 210 changes over the received electronic money use data 920 to integrated mile point data 925, by exploiting the mile point/ electronic money value changeover device 300 embodying the present invention. In this integrated mile point data 925, there may be included the information, such as shop code, mileage number or the amount used.

The integrated mile point data, obtained on conversion, are sent from the electronic money management server 210 to the mileage management server 110 (S930). The mileage management server 110 executes the processing for integrating the mile points, based on the integrated mile point data 925 (S940). The user may use the integrated mile points for enjoying privileges such as purchasing charge-free boarding tickets.

The mileage management server 110 formulates mile fee request data, based on the integrated mile point data 925 (S950). The mile fee is demanded of the shop, as the remuneration for prompting the user (electronic money card/ mileage card holder) to visit the shop 250 under the assumption that the user has purchased goods or services in the shop 250 as he/she is instigated by the electronic money card/mileage card 230. The mile fee demand data is processed by the electronic money management server 210, acting as a proxy (S960), and thence forwarded to the shop 250 where the electronic money is valid (S970). The shop 250 then liquidates the mile fee.

In the embodiment shown in Fig.9, the mile points of a customer increases only on using the electronic money, thus effectively contributing to the coming into widespread use of the electronic money. In addition, the system has the favorable effect in instigating the user to visit the shop 250, and hence there may be a good prospect of increasing the proceeds not only of the mileage service providers and electronic money service providers but also of the shops where the electronic money is valid.

Although the present invention has so far been explained with reference to the drawings, the present invention is not limited to the embodiments explained. Instead, the present invention may encompass various changes or corrections that may be envisaged by those skilled in the art based on the technical matter stated in the claims.

For example, the present invention may, of course, be applied to all sorts of possible service configurations of the mileage services that may be enjoyed by the user through the mile points.

In the foregoing explanation, the mileage card and the electronic money card are distinct from each other. Alternatively, the mileage card and the electronic money card may be integrated into a sole card. The mileage card or the electronic money card may be provided with a credit card function allowing for credit transactions. Of course, the mileage card, electronic money card and the credit card may be integrated into a sole card.

In the foregoing explanation, the system for exchanging the mile points for the electronic money value is taken as an example. However, the present invention may be applied to a reverse case, that is, to a case of exchanging the electronic money value for the mile points.

In the foregoing explanation, the mile points are managed by the mileage card and the electronic money value is managed by the electronic money card. However, the user does not necessarily have to own a real card but may only have a virtual card on the network to exchange the mile points for the electronic money value.

The present invention is not limited to the above-described embodiments explained with reference to the drawings and, as may be apparent to those skilled in the art, various changeovers or substitutions by equivalents may be made without departing from the scope of the invention as defined in the claims.

## Claims

1. An electronic money value changeover system comprising
a card including an information recording section allowing for reading out and writing the information, said information recording section having recorded thereon the electronic money wallet information, including a wallet number, correlated with a mileage number, from the outset;
an electronic money management server managing an electronic money value ledger in association with said wallet number;
a mileage management server managing a mile point ledger in association with said mileage number;
a mile point/ electronic money value changeover device managing said wallet number and the mileage number in association with each other; said mile point/ electronic money value changeover device referring to said electronic money value ledger matched to said wallet number from said electronic money management server and to said mile point ledger matched to said mileage number from said mileage management server, responsively to a request from a user, changing over preset mile points to an electronic money value, having said electronic money management server execute integrating processing in an electronic money value ledger thereof and having said mileage management server execute deduction processing in a mile point ledger thereof, based on changed-over results; and
an electronic money value update terminal reading out a wallet number from said card, and referring to said electronic money value ledger of said electronic money management server to update the electronic money wallet information recorded in said electronic money equivalent portion.

2. The electronic money value changeover system according to claim 1 wherein changeover from the mile points to the electronic money value is carried out by batch processing.

3. The electronic money value changeover system according to claim 1 wherein changeover from the mile points to the electronic money value is carried out by real-time processing.

4. The electronic money value changeover system according to claim 1 wherein the use information of said electronic money value is acquired, integration data for integrating mile points matched to the use information acquired is notified to said mileage management server, and wherein said mileage management server integrates the matched mile points.

5. The electronic money value changeover system according to claim 1 wherein said card is a mileage card having said mileage number recorded thereon.

6. An electronic money value changeover apparatus comprising
a card including an information recording section allowing for reading out and writing the information, said information recording section having recorded thereon the electronic money wallet information, including a wallet number correlated with a mileage number, from the outset, said wallet number and the mileage number being managed in a correlated fashion; wherein
said electronic money value ledger matched to said wallet number is referred to from said electronic money management server, and said mile point ledger matched to said mileage number is referred to from said mileage management server, responsively to a request from a user, preset mile points are changed over to an electronic money value, electronic money value integration is carried out in an electronic money value ledger of said electronic money management server and mile points are deducted in the mile point ledger of said mileage management server, depending on changed-over results.

7. The electronic money value changeover system according to claim 6 wherein changeover from the mile points to the electronic money value is carried out by batch processing.

8. The electronic money value changeover system according to claim 6 wherein changeover from the mile point to the electronic money value is carried out by real-time processing.

9. The electronic money value changeover system according to claim 6 wherein the use information of said electronic money value is acquired, integration data for integrating mile points matched to the use information acquired is notified to said mileage management server, and wherein said mileage management server integrates the matched mile points.

10. A program for operating an electronic money value changeover apparatus comprising
a card including an information recording section allowing for reading out and writing the information, said information recording section having recorded thereon the electronic money wallet information, including a wallet number correlated with a mileage number, from the outset, said wallet number and the mileage number being managed in a correlated fashion; wherein
said electronic money value ledger matched to said wallet number is referred to from said electronic money management server, and said mile point ledger matched to said mileage number is referred to from said mileage management server, responsively to a request from a user, preset mile points are changed over to an electronic money value, electronic money value integration is carried out in an electronic money value ledger of said electronic money management server and mile points are deducted in the mile point ledger of said mileage management server, depending on changed-over results.

11. A computer-readable recording medium having recorded thereon a program by which a computer may operate as a electronic money value changeover apparatus wherein
a card including an information recording section allowing for reading out/writing the information, said information recording section having recorded thereon the electronic money wallet information, including a wallet number correlated with a mileage number, from the outset, said wallet number and the mileage number being managed in a correlated fashion; and wherein
said electronic money value ledger matched to said wallet number is referred to from said electronic money management server, and said mile point ledger matched to said mileage number is referred to from said mileage management server, responsively to a request from a user, preset mile points are changed over to an electronic money value, electronic money value integration is carried out in an electronic money value ledger of said electronic money management server and mile points are deducted in the mile point ledger of said mileage management server, depending on changed-over results.

12. An electronic money value changing over method employing
a card including an information recording section allowing for reading out/writing the information, said information recording section having recorded thereon the electronic money wallet information, including a wallet number correlated with a mileage number, from the outset, an electronic money management server managing an electronic money value ledger in association with said wallet number, and a mileage management server managing a mile point ledger in association with said mileage number; said method comprising
an electronic money value change-over step of managing said wallet number and the mileage number in association with each other, referring to said electronic money value ledger matched to said wallet number from said electronic money value management server and also referring to said mile point ledger matched to said mileage number from said mileage management server, responsively to a request from a user, changing over preset mile points to an electronic money value, having said electronic money management server execute integrating processing in an electronic money value ledger thereof and having said mileage management server execute deduction processing in a mile point ledger thereof, depending on changed-over results; and
an electronic money value update step of reading out a wallet number from said mileage card, referring to said electronic money value ledger of said electronic money management server to update the electronic money wallet information recorded in said electronic money equivalent portion.

13. The electronic money value changing over method according to claim 12 wherein changeover from the mile points to the electronic money value is carried out by batch processing.

14. The electronic money value changing over method according to claim 12 wherein changeover from the mile points to the electronic money value is carried out by real-time processing.

15. The electronic money value changeover system according to claim 12 wherein the use information of said electronic money value is acquired, integration data for integrating the mile points matched to the use information acquired is notified to said mileage management server, and wherein said mileage management server integrates the matched mile points.

## Amended claims

### Amended claims under Art. 19.1 PCT

**1.** (Amended) An electronic money value changeover system comprising
a card including an information recording section allowing for reading out and writing the information, said information recording section having recorded thereon the electronic money wallet information, including a wallet number, correlated with a mileage number, from the outset;
an electronic money management server managing an electronic money value ledger in association with said wallet number;
a mileage management server for managing mile points resulting from the distance for which a user was on board, in a mile point ledger, in correlation with said mileage number;
a mileage management server managing a mile point ledger in association with said mileage number;
a mile point/ electronic money value changeover device managing said wallet number and the mileage number in association with each other; said mile point/ electronic money value changeover device referring to said electronic money value ledger matched to said wallet number from said electronic money management server and to said mile point ledger matched to said mileage number from said mileage management server, responsively to a request from a user, changing over preset mile points to an electronic money value, having said electronic money management server execute integrating processing in an electronic money value ledger thereof and having said mileage management server execute deduction processing in a mile point ledger thereof, based on changed-over results; and
an electronic money value update terminal reading out a wallet number from said card, and referring to said electronic money value ledger of said electronic money management server to update the electronic money wallet information recorded in said electronic money equivalent portion.

**2.** The electronic money value changeover system according to claim 1 wherein changeover from the mile points to the electronic money value is carried out by batch processing.

**3.** The electronic money value changeover system according to claim 1 wherein changeover from the mile points to the electronic money value is carried out by real-time processing.

**4.** The electronic money value changeover system according to claim 1 wherein the use information of said electronic money value is acquired, integration data for integrating mile points matched to the use information acquired is notified to said mileage management server, and wherein said mileage management server integrates the matched mile points.

**5.** The electronic money value changeover system according to claim 1 wherein said card is a mileage card having said mileage number recorded thereon.

**6.** (Amended) An electronic money value changeover apparatus comprising
a card including an information recording section allowing for reading out and writing the information, said information recording section having recorded thereon the electronic money wallet information, including a wallet number correlated with a mileage number, from the outset, said wallet number and the mileage number being managed in a correlated fashion; wherein
said electronic money value ledger matched to said wallet number is referred to from said electronic money management server, and said mile point ledger matched to said mileage number is referred to from said mileage management server, responsively to a request from a user, preset mile points are changed over to an electronic money value, electronic money value integration is carried out in an electronic money value ledger of said electronic money management server and mile points are deducted in the mile point ledger of said mileage management server, depending on changed-over results; and wherein
the wallet number is read out from said card, and reference is made to said electronic money ledger of said electronic money management server to update the electronic money wallet information recorded in said information recording section of said card.

**7.** The electronic money value changeover system according to claim 6 wherein changeover from the mile points to the electronic money value is carried out by batch processing.

**8.** The electronic money value changeover system according to claim 6 wherein changeover from the mile points to the electronic money value is carried out by real-time processing.

**9.** The electronic money value changeover system according to claim 6 wherein the use information of said electronic money value is acquired, integration data for integrating mile points matched to the use information acquired is notified to said mileage management server, and wherein said mileage management server integrates the matched mile points.

**10.** (Amended) A program for operating an electronic money value changeover apparatus comprising
a card including an information recording section allowing for reading out and writing the information, said information recording section having recorded thereon the electronic money wallet information, including a wallet number correlated with a mileage number, from the outset, said wallet number and the mileage number being managed in a correlated fashion; wherein
said electronic money value ledger matched to said wallet number is referred to from said electronic money management server, and said mile point ledger matched to said mileage number is referred to from said mileage management server, responsively to a request from a user, preset mile points are changed over to an electronic money value, electronic money value integration is carried out in an electronic money value ledger of said electronic money management server, mile points are deducted in the mile point ledger of said mileage management server, depending on changed-over results, the wallet information is read out from said card, and reference is made to said electronic money value ledger of said electronic money management server to update the electronic money wallet information recorded in said information recording section of said card.

**11.** (Amended) A computer-readable recording medium having recorded thereon a program by which a computer may operate as a electronic money value changeover apparatus wherein
a card including an information recording section allowing for reading out/writing the information, said information recording section having recorded thereon the electronic money wallet information, including a wallet number correlated with a mileage number, from the outset, said wallet number and the mileage number being managed in a correlated fashion; wherein
said electronic money value ledger matched to said wallet number is referred to from said electronic money management server, and said mile point ledger matched to said mileage number is referred to from said mileage management server, responsively to a request from a user, preset mile points are changed over to an electronic money value, electronic money value integration is carried out in an electronic money value ledger of said electronic money management server and mile points are deducted in the mile point ledger of said mileage management server, depending on changed-over results, the wallet information is read out from said card, and wherein
reference is made to said electronic money value ledger of said electronic money management server to update the electronic money wallet information recorded in said information recording section of said card.

**12.** (Amended) An electronic money value changing over method employing
a card including an information recording section allowing for reading out/writing the information, said information recording section having recorded thereon the electronic money wallet information, including a wallet number correlated with a mileage number, from the outset, an electronic money management server managing an electronic money value ledger in association with said wallet number, and a mileage management server managing mile points resulting from the distance for which a user was on board, in a mile point ledger, in correlation with said mileage number; said method comprising
an electronic money value change-over step of managing said wallet number and the mileage number in association with each other, referring to said electronic money value ledger matched to said wallet number from said electronic money value management server and also referring to said mile point ledger matched to said mileage number from said mileage management server, responsively to a request from a user, changing over preset mile points to an electronic money value, having said electronic money management server execute integrating processing in an electronic money value ledger thereof and having said mileage management server execute deduction processing in a mile point ledger thereof, depending on changed-over results; and
an electronic money value update step of reading out a wallet number from said mileage card, referring to said electronic money value ledger of said electronic money management server to update the electronic money wallet information recorded in said electronic money equivalent portion.

**13.** The electronic money value changing over method according to claim 12 wherein changeover from the mile points to the electronic money value is carried out by batch processing.

**14.** The electronic money value changing over method according to claim 12 wherein changeover from the mile points to the electronic money value is carried out by real-time processing.

**15.** The electronic money value changeover system according to claim 12 wherein the use information of said electronic money value is acquired, integration data for integrating the mile points matched to the use information acquired is notified to said mileage management server, and wherein said mileage management server integrates the matched mile points.
